# NEUE EUROPÄISCHE PATENTSCHRIFT

(11) **EP 3 333 489 B2**
(45) Veröffentlichungstag und Bekanntmachung des Hinweises auf die Entscheidung über den Einspruch: **22.02.2023**
(45) Hinweis auf die Patenterteilung: 20.05.2020
(21) Anmeldenummer: 17203472.0
(22) Anmeldetag: 24.11.2017
(51) Int. Cl.: F24C 15/02, H05B 6/64

(54) **HAUSHALTSGARGERÄT**
HOUSEHOLD COOKING APPLIANCE
APPAREIL DE CUISSON MÉNAGER

(30) Priorität: 12.12.2016 DE 102016224743
(43) Veröffentlichungstag der Anmeldung: 13.06.2018
(73) Patentinhaber: BSH Hausgeräte GmbH, 81739 München (DE)
(72) Erfinder: Streitwieser, Katrin, 83329 Waging am See (DE); Aberger, Michael, 83224 Grassau/Rottau (DE)

(56) Entgegenhaltungen:
- EP-A1- 1 172 614
- EP-A1- 2 090 832
- EP-A1- 2 901 085
- EP-A2- 1 867 927
- EP-A2- 2 921 782
- WO-A1-2011/120678
- WO-A1-2011/120678
- WO-A1-2014/102116
- DE-A1-102005 037 020
- DE-A1-102012 213 126

## Beschreibung

Die vorliegende Erfindung betrifft ein Haushaltsgargerät.

Ein Haushaltsgargerät, insbesondere ein Backofen, kann einen beheizbaren Garraum aufweisen, der mit Hilfe einer Tür verschließbar ist. Um eine derartige Tür reinigen zu können, ist es vorteilhaft, wenn diese von einem Benutzer einfach zerlegbar und wieder montierbar ist.

Die DE 10 2010 013 903 A1 beschreibt eine Ofentüre umfassend wenigstens eine senkrecht angeordnete Türplatte, wobei an dieser Türplatte in deren rechten und linken Seitenbereichen oder -kanten ein erstes und ein zweites vertikal angeordnetes Türrahmenteil oder Türsäulenteil angeordnet sind. Die Türplatte wird von oben an deren Oberkante durch ein Türabdeckteil abgedeckt. Das Türabdeckteil umfasst einen Dorn oder einen Vorsprung, der an einem ersten Seitenbereich des Türabdeckteils angeordnet ist, wobei dieser Dorn oder Vorsprung derart ausgebildet ist, dass er in eine entsprechende Aussparung, welche an den ersten Türrahmenteil oder Türsäulenteil angeordnet ist, eingreifen kann. Das Türabdeckteil umfasst ferner ein Mittel zum Herstellen einer Schnappverbindung im Seitenbereich des Türabdeckteiles, wobei dieses Mittel derart ausgestaltet ist, dass es in eine Aussparung oder einen Hintergriff am zweiten Türrahmenteil oder Türsäulenteil im Wege einer Schnappverbindung eingreifen kann.

Die DE 10 2012 213 126 A1 zeigt eine Tür für ein Haushaltsgerät mit einer flächigen Frontabdeckung, die eine Rückseite aufweist, an welcher zumindest ein Türprofil angeordnet ist, und mit einer oberen Türabdeckung, die mit dem Türprofil verrastend verbindbar ist, wobei zumindest ein Vorspannelement ausgebildet ist, durch welches ein Rastelement der Türabdeckung in der in einer Rastaufnahme im Türprofil verrasteten Position an das Türprofil angedrückt ist.

Die EP 2 400 226 A1 beschreibt eine Tür für ein Haushaltsgargerät. Die Tür umfasst eine Außenscheibe, an der zwei Türprofile befestigt sind. An einer Oberkante der Tür ist eine Abschlussblende vorgesehen, die mit den Türprofilen verbunden ist.

Die EP 2 901 085 A1 zeigt eine Tür für ein Haushaltsgerät, mit einer ersten Türscheibe und einer dazu beabstandet angeordneten zweiten Türscheibe, und einer Blende, die als zumindest bereichsweise Abdeckung von Rändern der Türscheiben angeordnet ist, wobei in die Blende eine Lagerungseinrichtung zum Lagern der Türscheiben zueinander integriert ist.

Die EP 1 867 927 A2 beschreibt eine Tür zum Verschließen der Beschickungsöffnung eines Garraums eines Garofens, insbesondere eines Haushaltsgarofens, umfassend eine Außenscheibe, wenigstens eine Innenscheibe, wenigstens ein Halteelement zum Halten der wenigstens einen Innenscheibe, wenigstens ein Abdeckelement zum Abdecken des Halteelements, wobei das wenigstens eine Halteelement und wenigstens ein Abdeckelement separat hergestellt und dann miteinander zu einer Baugruppe verbunden sind, wobei zwischen dem wenigstens einen Abdeckelement und dem wenigstens einen Halteelement ein Luftführungskanal, insbesondere ein Luftausblaskanal, ausgebildet ist und wobei die Baugruppe die obere Einfassung der Türe ist und/oder im oberen Bereich der Türe angeordnet ist.

Die EP 1 172 614 A1 zeigt eine Tür für ein Haushaltsgerät, insbesondere einen Haushaltsgarofen, mit einer Außenscheibe, wenigstens zwei mit der Außenscheibe verbundenen Trägerelementen und wenigstens zwei Halteelementen mit jeweils wenigstens einem Halteabschnitt für wenigstens eine Innenscheibe, wobei die Halteelemente an dem jeweiligen Trägerelement mittels wenigstens einer Rast- oder Schnappverbindung befestigt sind, wobei jede Rast- oder Schnappverbindung mit einer definierten Ausrichtung des oder der ineinandergreifenden Rast- oder Schnappelemente und Rast- oder Schnappaufnahmen unter einem Winkel ungleich 90° bezogen auf die Längsachse eines Trägerelements ausgebildet ist.

Die DE 10 2005 037 020 A1 beschreibt eine Vorrichtung mit einer Haushaltsgerätetürträgereinheit, die wenigstens zwei Leisteneinheiten aufweist. Um verbesserte Montageeigenschaften bereitzustellen, ist die Haushaltsgerätetürträgereinheit zu einer einen Rahmen bildenden Montageeinheit zusammenführbar, die zur Montage an einer Haushaltsgerätetürfronteinheit vorgesehen ist.

Vor diesem Hintergrund besteht eine Aufgabe der vorliegenden Erfindung darin, ein verbessertes Haushaltsgargerät zur Verfügung zu stellen.

Demgemäß wird ein Haushaltsgargerät mit einem Garraum und einer Tür zum Verschließen des Garraums vorgeschlagen. Die Tür weist zwei voneinander beabstandet angeordnete Türprofile und eine an einer Oberkante der Tür vorgesehene Abschlussblende auf, die mit den Türprofilen formschlüssig verbunden ist, wobei die Abschlussblende zwei Federelemente aufweist, wobei jedes Federelement einem der Türprofile zugeordnet ist und dieses kontaktiert, wobei die Federelemente federelastisch verformbar sind, um die Abschlussblende zwischen den Türprofilen zu zentrieren, wobei die Abschlussblende und die Federelemente einteilig ausgebildet sind, wobei die Abschlussblende zwei federelastisch verformbare Schnapphaken aufweist, die dazu eingerichtet sind, formschlüssig in die Türprofile einzugreifen, und wobei die Schnapphaken und die Federelemente voneinander getrennte Abschnitte der Abschlussblende sind.

Dadurch, dass die Federelemente die Abschlussblende zwischen den Türprofilen zentrieren, ist eine selbsttätige Positionierung der Bauteile zueinander möglich, welche bei jedem erneutem Zusammenbau die richtige Position der Bauteile zueinander sicherstellt und die Toleranzen der Bauteile ausgleichen kann. Es ist keine Relativbewegung der Abschlussblende zu den Türprofilen möglich, wodurch bei einer Bewegung der Tür keine störenden Geräusche erzeugt werden und ein Wackeln oder Klappern der Abschlussblende verhindert wird. Es ist somit ein einfacher und wiederholbarer Toleranzausgleich möglich. Dadurch, dass die Federelemente einteilig mit der Abschlussblende ausgebildet ist, kann auf zusätzliche und damit verlierbare Bauteile verzichtet werden. Zudem können die Abschlussblende und die Federelemente aus dem gleichen Werkstoff gebildet sein. Durch die einteilige Lösung fallen keine zusätzlichen Teile- und Montagekosten an. Ein weiterer Vorteil ist die leichtgängige Montage und Demontage sowohl in der Fertigung als auch beim Kunden. Der durch die Federelemente geschaffene Toleranzausgleich erlaubt größere Toleranzen in der Herstellung der Bauteile und führt gleichzeitig zu einer verbesserten Optik und Haptik der Tür beim Kunden.

Die Tür weist vorzugsweise mehrere Scheiben, insbesondere eine Frontscheibe oder Außenscheibe, eine Innenscheibe und mehrere zwischen der Außenscheibe und der Innenscheibe angeordnete Zwischenscheiben auf, die bevorzugt aus einem Glaswerkstoff gefertigt sind. Die Türprofile können fest mit der Außenscheibe verbunden, beispielsweise mit dieser verklebt, sein. Die Türprofile sind jeweils beidseits randseitig an der Tür vorgesehen. Die Türprofile sind vorzugsweise parallel zueinander und beabstandet voneinander angeordnet, Die Türprofile können beispielsweise aus Stahl oder einem Kunststoffmaterial gefertigt sein. Eine formschlüssige Verbindung entsteht durch das Ineinander- oder Hintergreifen von mindestens zwei Verbindungspartnern, hier der Abschlussblende und den Türprofilen. Unter "Zentrieren" ist vorliegend zu verstehen, dass die Abschlussblende beziehungsweise ein Basisabschnitt der Abschlussblende mittig zu oder zwischen den Türprofilen angeordnet wird. Unter "einteilig" ist vorliegend zu verstehen, dass die Abschlussblende und die Federelemente ein gemeinsames Bauteil bilden und keine voneinander getrennten Bauteile sind. Der Begriff "einteilig" kann durch den Begriff "einstückig" ersetzt werden. Insbesondere können die Federelemente auch materialeinstückig mit der Abschlussblende ausgebildet sein. Das heißt, die Abschlussblende und die Federelemente sind aus demselben Material gefertigt. Vorzugsweise ist die Abschlussblende aus einem Kunststoffmaterial gefertigt. Bevorzugt ist die Abschlussblende ein Kunststoffspritzgussbauteil. Hierdurch kann die Abschlussblende kostengünstig in großen Stückzahlen hergestellt werden.

Die Abschlussblende weist zwei federelastisch verformbare Schnapphaken auf, die dazu eingerichtet sind, formschlüssig in die Türprofile einzugreifen.

Insbesondere ist jedem Türprofil ein derartiger Schnapphaken zugeordnet. Die Abschlussblende ist hierdurch werkzeuglos demontierbar und montierbar. Die Schnapphaken sind insbesondere nicht identisch mit den Federelementen. Das heißt, die Schnapphaken und die Federelemente sind voneinander getrennte Abschnitte der Abschlussblende.

Gemäß einer weiteren Ausführungsform sind die Abschlussblende und die Schnapphaken einteilig ausgebildet.

Insbesondere sind die Abschlussblende und die Schnapphaken materialeinstückig ausgeführt.

Gemäß einer weiteren Ausführungsform weist jedes Türprofil einen Eingriffsabschnitt, insbesondere einen Hinterschnitt, auf, in den einer der Schnapphaken formschlüssig eingreift.

Insbesondere ist jedem Schnapphaken ein derartiger Eingriffsabschnitt zugeordnet. Der Eingriffsabschnitt kann auch als in dem jeweiligen Türprofil ausgebildeter Durchbruch oder als eine Bohrung ausgebildet sein.

Die Abschlussblende ist mit Hilfe eines Aufsteckens derselben auf die Türprofile von einem Demontagezustand, in dem die Abschlussblende außer formschlüssigem Eingriff mit den Türprofilen ist, in einen Montagezustand, in dem die Abschlussblende in formschlüssigem Eingriff mit den Türprofilen ist, verbringbar.

Zum Verbringen der Abschlussblende von dem Demontagezustand in den Montagezustand wird die Abschlussblende linear zu und linear entlang der Türprofile bewegt.

Die Federelemente weisen jeweils einen Kontaktabschnitt auf, der dazu eingerichtet ist, bei einem Verbringen der Abschlussblende von dem Demontagezustand in den Montagezustand oder umgekehrt auf einer korrespondierenden Kontaktfläche des jeweiligen Türprofils abzugleiten.

Insbesondere ist jedem Federelement eine derartige Kontaktfläche zugeordnet. Bevorzugt verformen sich die Federelemente bei dem Verbringen der Abschlussblende von dem Montagezustand in den Montagezustand oder umgekehrt federelastisch und gleiten dabei leichtgängig auf den Kontaktflächen ab.

Gemäß einer weiteren Ausführungsform wirken die Kontaktflächen so mit den Federelementen zusammen, dass die Federelemente bei einem Verbringen der Abschlussblende von dem Demontagezustand in den Montagezustand von einem unverformten Zustand in einen verformten Zustand verformbar sind.

Bevorzugt wirken die Kontaktflächen auch so mit den Federelementen zusammen, dass sich die Federelemente bei einem Verbringen der Abschlussblende von dem Montagezustand in den Demontagezustand selbsttätig von dem verformten Zustand in den unverformten Zustand verformen.

Jedes Federelement weist einen ersten Schenkel und einen mit Hilfe des Kontaktabschnitts mit dem ersten Schenkel verbundenen zweiten Schenkel auf.

Insbesondere sind die Federelemente L-förmig ausgebildet. Bevorzugt sind die Federelemente jeweils als eine gebogene lange Lasche ausgebildet, welche ihre Federwirkung über die Länge und die Wandstärke der Lasche erzeugt. Durch Variation dieser Faktoren kann die Federwirkung auf den jeweiligen Anwendungsfall angepasst werden. Die Federelemente können auch in jeder anderen Geometrie ausgeführt sein, solange diese eine federnde Wirkung auf die Türprofile ausübt. Die Federwirkung kann auch durch Schlitze im jeweiligen Federelement oder durch dünne Wandstärken eingestellt werden.

Gemäß einer weiteren Ausführungsform weist die Abschlussblende zumindest eine Einführhilfe auf, mit deren Hilfe die Abschlussblende bei einem Verbringen der Abschlussblende von dem Demontagezustand in den Montagezustand linear an den Türprofilen geführt ist.

Vorzugsweise sind zumindest zwei Einführhilfen vorgesehen. Mit Hilfe der Einführhilfen ist eine einfache Montage möglich und eine Fehlmontage wird zuverlässig verhindert. Bevorzugt sind die Einführhilfen einteilig mit der Abschlussblende ausgebildet. Die Einführhilfen sind nicht identisch mit den Federelementen und den Schnapphaken. Das heißt, die Einführhilfen, die Schnapphaken und die Federelemente sind voneinander getrennte Abschnitte der Abschlussblende. Bevorzugt ist jeweils ein Federelement zwischen einem Schnapphaken und einer Einführhilfe angeordnet.

Gemäß einer weiteren Ausführungsform weist die Abschlussblende zumindest einen Anschlagabschnitt auf, der in dem Montagezustand eine korrespondierende Oberkante des jeweiligen Türprofils kontaktiert.

Bevorzugt sind zwei derartige Anschlagabschnitte vorgesehen, wobei jedem Türprofil ein Anschlagabschnitt zugeordnet ist. Mit Hilfe der Anschlagabschnitte ist eine reproduzierbare Positionierung der Abschlussblende relativ zu den Türprofilen in einer Richtung entlang den Türprofilen möglich.

Weitere mögliche Implementierungen des Haushaltsgargeräts umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Haushaltsgargeräts hinzufügen.

Weitere vorteilhafte Ausgestaltungen und Aspekte des Haushaltsgargeräts sind Gegenstand der Unteransprüche sowie der im Folgenden beschriebenen Ausführungsbeispiele des Haushaltsgargeräts. Im Weiteren wird das Haushaltsgargerät anhand von bevorzugten Ausführungsformen unter Bezugnahme auf die beigelegten Figuren näher erläutert.
- Fig. 1: zeigt eine schematische perspektivische Ansicht einer Ausführungsform eines Haushaltsgargeräts;
- Fig. 2: zeigt eine schematische perspektivische Ansicht einer Ausführungsform einer Abschlussblende für eine Tür des Haushaltsgargeräts gemäß Fig. 1;
- Fig. 3: zeigt eine weitere schematische perspektivische Ansicht der Abschlussblende gemäß Fig. 2;
- Fig. 4: zeigt eine weitere schematische perspektivische Ansicht der Abschlussblende gemäß Fig. 2;
- Fig. 5: zeigt eine schematische perspektivische Ansicht einer Ausführungsform einer Tür für das Haushaltsgargerät gemäß Fig. 1; und
- Fig. 6: zeigt eine weitere schematische perspektivische Ansicht der Tür gemäß Fig. 5.

In den Figuren sind gleiche oder funktionsgleiche Elemente mit denselben Bezugszeichen versehen worden, sofern nichts anderes angegeben ist.

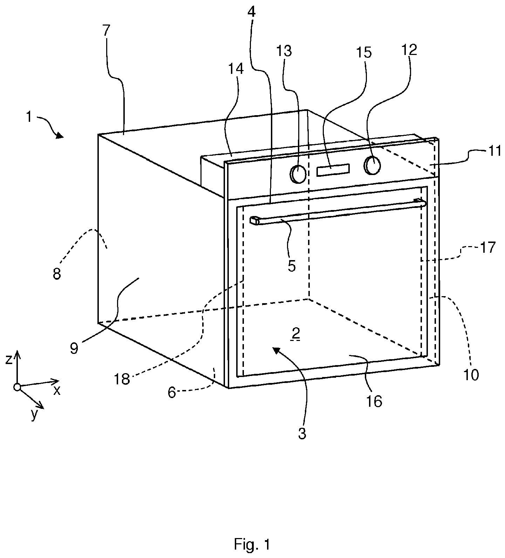

Die Fig. 1 zeigt eine schematische perspektivische Ansicht einer Ausführungsform eines Haushaltsgargeräts 1. Das Haushaltsgargerät 1 ist vorzugsweise ein Backofen, ein Backofen mit Dampfgarfunktion, ein Mikrowellen-Kombinationsbackofen oder dergleichen. Das Haushaltsgargerät 1 weist eine Backofenmuffel, Muffel oder einen Garraum 2 auf, der mit Hilfe einer Tür 3 verschließbar ist. Der Garraum 2 kann im Inneren eines Gehäuses des Haushaltsgargeräts 1 angeordnet sein. Die Tür ist in der Fig. 1 in einer geschlossenen Stellung dargestellt. Durch ein Schwenken um eine an einem unteren Ende der Tür 3 vorgesehene Schwenkachse kann die Tür 3 geschlossen oder geöffnet werden. Alternativ kann die Tür 3 seitlich an dem Garraum 2 angeschlagen sein. Weiterhin kann die Tür 3 an einem aus dem Garraum 2 herausziehbaren Backwagen angeordnet sein. An einem oberen Abschnitt oder einer Oberkante 4 der Tür 3 kann ein Griff 5 vorgesehen sein.

Der Garraum 2 weist einen Boden 6, eine dem Boden 6 gegenüberliegend angeordnete Decke 7, eine der geschlossenen Tür 3 gegenüberliegend angeordnete Rückwand 8 und zwei einander gegenüberliegend angeordnete Seitenwände 9, 10 auf. Der Garraum 2 ist vorzugsweise quader- oder würfelförmig. Der Garraum 2 kann aus einem Metallwerkstoff, insbesondere aus einem Stahlblech, gefertigt sein.

Das Haushaltsgargeräts 1 umfasst weiterhin an einer Bedienblende 11 vorgesehene Bedienknäufe 12, 13. Die Bedienknäufe 12, 13 können beispielsweise drehbar sein. Rückseitig an der Bedienblende 11 kann eine nur schematisch gezeigte Steuereinrichtung 14 zum Steuern des Haushaltsgargeräts 1 vorgesehen sein. Die Steuereinrichtung 14 kann eine Regel- und/oder Steuereinrichtung sein. An der Bedienblende 11 kann weiterhin ein Anzeigedisplay 15 vorgesehen sein. Mit Hilfe des Anzeigedisplays 15 kann ein Betriebszustand des Haushaltsgargeräts 1 angezeigt werden. Beispielsweise kann mit Hilfe des Anzeigedisplays 15 eine mit Hilfe eines der Bedienknäufe 12, 13 eingestellte Temperatur angezeigt werden.

Die Tür 3 weist weiterhin eine Außenscheibe 16 sowie eine in der Fig. 1 nicht gezeigte Innenscheibe auf. Die Außenscheibe 16 und die Innenscheibe sind parallel zueinander und beabstandet voneinander angeordnet. Zwischen der Außenscheibe 16 und der Innenscheibe sind ein erstes Türprofil 17 sowie ein zweites Türprofil 18 angeordnet. Die Türprofile 17, 18 verlaufen in einem geschlossenen Zustand der Tür 3 parallel zu einer z-Richtung z des Haushaltsgargeräts 1. In der Fig. 1 sind weiterhin noch eine x-Richtung x sowie eine y-Richtung y gezeigt. Die Türprofile 17, 18 sind fest mit der Außenscheibe 16 verbunden, beispielsweise verklebt. Die Türprofile 17, 18 sind beabstandet voneinander und parallel zueinander positioniert. Die Türprofile 17, 18 sind vorzugsweise aus einem Kunststoffmaterial gefertigt, können aber auch als Stahlprofile ausgebildet sein.

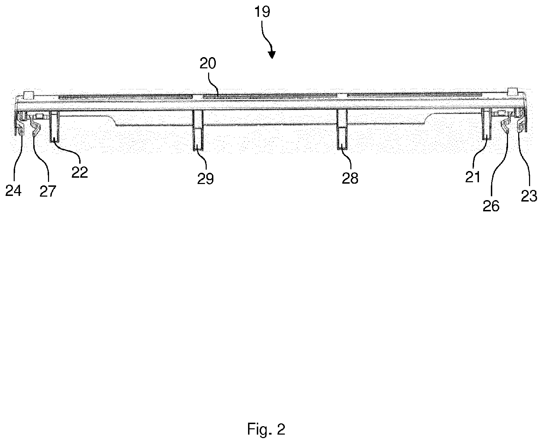

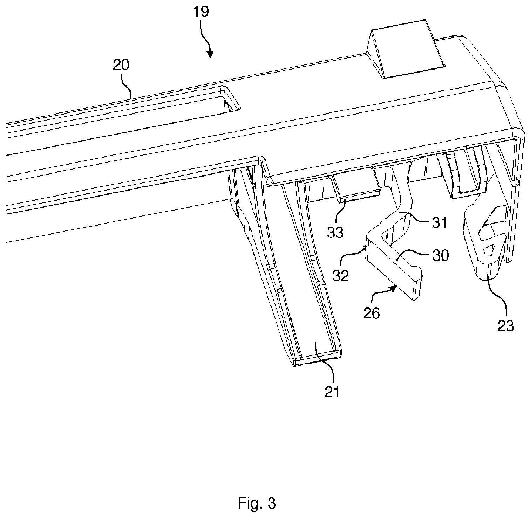

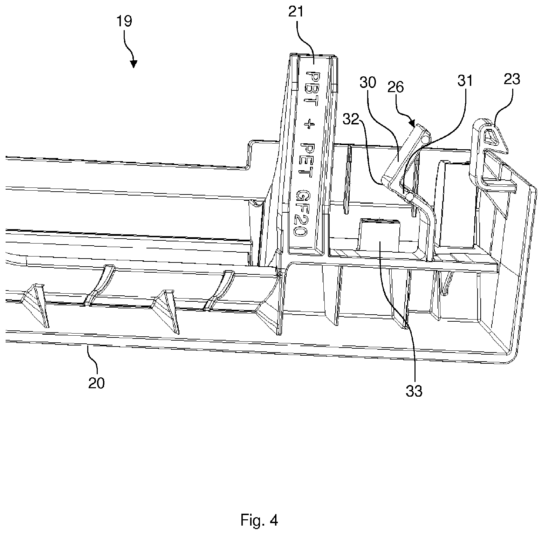

Die Tür 3 umfasst weiterhin eine an der Oberkante 4 vorgesehene und abnehmbare Abschlussblende 19, die in den Fig. 2 bis 4 gezeigt ist. Die Abschlussblende 19 kann auch als Topblende bezeichnet werden und schließt einen zwischen der Außenscheibe 16 und der Innenscheibe vorgesehenen Zwischenraum nach oben hin, das heißt, in der z-Richtung z ab. Die Abschlussblende 19 ist vorzugsweise als einstückiges Kunststoffbauteil, insbesondere als einstückiges Kunststoffspritzgussbauteil, ausgebildet. Hierdurch kann die Abschlussblende 19 kostengünstig in großen Stückzahlen hergestellt werden. Als Material für die Abschlussblende 19 kommt beispielsweise ein Gemisch aus Polybutylenterephthalat (PBT) und Polyethylenterephthalat (PET) mit einer Glasfaserfüllung zum Einsatz. Beispielsweise kann das verwendete Material mit 20% Glasfasern gefüllt sein.

Die Abschlussblende 19 weist einen leistenförmigen Basisabschnitt 20 auf. Beidseitig an dem Basisabschnitt 20 sind leistenförmige Einführhilfen 21, 22, insbesondere eine erste Einführhilfe 21 sowie eine zweite Einführhilfe 22, vorgesehen. Mit Hilfe der Einführhilfen 21, 22 ist die Abschlussblende 19 bei der Montage und Demontage derselben an der Tür 3 geführt. Beispielsweise können die Einführhilfen 21, 22 in der z-Richtung z an den Türprofilen 17, 18 geführt sein.

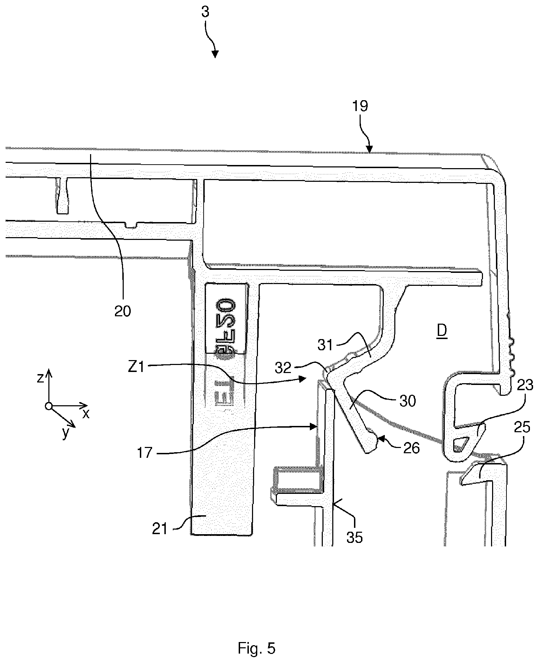

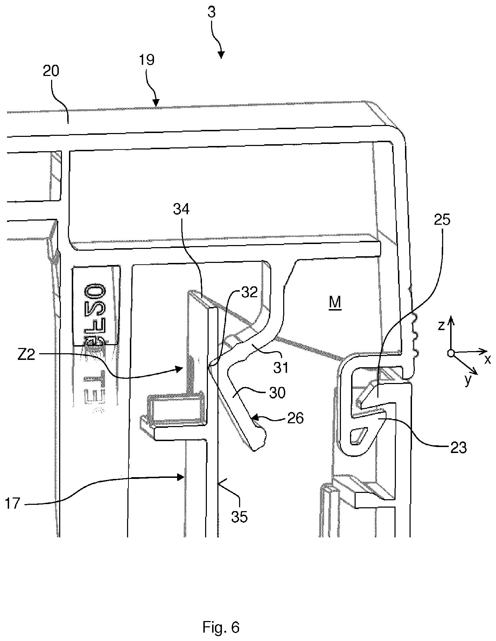

Weiterhin umfasst die Abschlussblende 19 einen federelastisch verformbaren ersten Schnapphaken 23 sowie einen federelastisch verformbaren zweiten Schnapphaken 24. Die Schnapphaken 23, 24 sind materialeinstückig mit dem Basisabschnitt 20 ausgebildet. Jeder Schnapphaken 23, 24 ist einem der Türprofile 17, 18 zugeordnet. Beispielsweise umfasst jedes Türprofil 17, 18 einen in den Fig. 5 und 6 gezeigten Eingriffsabschnitt 25, insbesondere einen Hinterschnitt, den der jeweilige Schnapphaken 23, 24 formschlüssig hintergreifen kann. Eine formschlüssige Verbindung entsteht durch das Ineinander- oder Hintergreifen von mindestens zwei Verbindungspartnern, in diesem Fall dem jeweiligen Schnapphaken 23, 24 und dem ihm zugeordneten Eingriffsabschnitt 25.

Zwischen den Schnapphaken 23, 24 und den Einführhilfen 21, 22 sind ein erstes Federelement 26 und ein zweites Federelement 27 angeordnet. Die Federelemente 26, 27 sind materialeinstückig mit dem Basisabschnitt 20 ausgebildet. Die Federelemente 26, 27 sind federelastisch verformbar. Zwischen den Einführhilfen 21, 22 sind ferner zwei voneinander beabstandet angeordnete weitere Einführhilfen 28, 29 vorgesehen.

Die Federelemente 26, 27 sind in der Aufsicht L-förmig ausgebildet. Jedes Federelement 26, 27 weist einen langen Schenkel 30 sowie einen kurzen Schenkel 31 auf. Die Schenkel 30, 31 sind an einem Kontaktabschnitt 32 miteinander verbunden. Bei einem federelastischen Verformen der Federelemente 26, 27 verformt sich bevorzugt der kurze Schenkel 31. Die Abschlussblende 19 weist weiterhin jeweils einen zwischen den Einführhilfen 21, 22 und den Federelementen 26, 27 angeordneten Anschlagabschnitt 33 auf. Jeder Anschlagabschnitt 33 ist dazu eingerichtet, auf einer jeweiligen Oberkante 34 der Türprofile 17, 18 aufzuliegen. Der Kontaktabschnitt 32 ist dazu eingerichtet, auf einer korrespondierenden Kontaktfläche 35 des jeweiligen Türprofils 17, 18 abzugleiten.

Die Funktionalität der Abschlussblende 19 wird nachfolgend mit Bezug auf die Fig. 5 und 6 erläutert. Die Abschlussblende 19 wird, wie in der Fig. 5 gezeigt, bei geöffneter Tür 3 von schräg oben im Wesentlichen in der z-Richtung z auf die beiden Türprofile 17, 18 aufgesteckt. Dabei wird die Abschlussblende 19 von einem Demontagezustand D, in dem die Abschlussblende 19 außer formschlüssigem Eingriff mit den Türprofilen 17, 18 ist, in einen in der Fig. 6 gezeigten Montagezustand M verbracht, in dem die Abschlussblende 19 in formschlüssigem Eingriff mit den Türprofilen 17, 18 ist. Dazu schnappen die Schnapphaken 23, 24 der Abschlussblende 19 in dem ihnen zugeordneten Türprofil 17, 18 ein. Insbesondere schnappen die Schnapphaken 23, 24 hinter den jeweiligen Eingriffsabschnitt 25 des entsprechenden Türprofils 17, 18 ein. Der Eingriffsabschnitt 25 kann auch als in dem jeweiligen Türprofil 17, 18 vorgesehener Durchbruch oder als Bohrung ausgebildet sein.

Bezüglich der x-Richtung x sind die Federelemente 26, 27 so ausgeformt, dass die Federelemente 26, 27 beim Aufstecken der Abschlussblende 19 auf die Türprofile 17, 18 federelastisch verformt werden. Dabei gleitet der jeweilige Kontaktabschnitt 32 auf der entsprechenden Kontaktfläche 35 des entsprechenden Türprofils 17, 18 ab. Hierbei wirken die Kontaktflächen 35 so mit den Federelementen 26, 27 zusammen, dass die Federelemente 26, 27 bei dem Verbringen der Abschlussblende 19 von dem Demontagezustand D in den Montagezustand M von einem unverformten Zustand Z1 in einen verformten Zustand Z2 verformt werden.

Die Federelemente 26, 27 sind dabei so ausgeformt, dass sie sich bei der Montage der Abschlussblende 19 an den Türprofilen 17, 18 in der x-Richtung x verformen und leichtgängig über die Kontaktflächen 35 der Türprofile 17, 18 rutschen. Hierdurch sind die Federelemente 26, 27 in dem Montagezustand M unter Spannung und zentrieren die Abschlussblende 19 zwischen den Türprofilen 17, 18. Unter "Zentrieren" ist dabei zu verstehen, dass mit Hilfe der Federvorspannung der Federelemente 26, 27 die Abschlussblende 19 beziehungsweise der Basisabschnitt 20 der Abschlussblende 19 mittig zwischen den beiden Türprofilen 17, 18 angeordnet ist. Weiterhin ermöglichen die Federelemente 26, 27 aufgrund ihrer Vorspannung einen sicheren und festen Sitz der Abschlussblende 19 auf den Türprofilen 17, 18. Die Abschlussblende 19 kann so auch bei großen Klebetoleranzen der Türprofile 17, 18 und der Bauteiltoleranzen der Abschlussblende 19 auf der Tür 3 ausgemittelt werden. Hierdurch kann eine ansprechende Optik verwirklich werden. Weiterhin ergibt sich jedoch eine gute Haptik, da die Abschlussblende 19 nicht wackeln kann.

Bei der Ausführungsform der Abschlussblende 19 gemäß den Fig. 2 bis 6 sind die Federelemente 26, 27 jeweils als gebogene lange Lasche ausgeführt, welche ihre Federwirkung über die Länge und die Wandstärke der Lasche, das heißt, die Länge der Schenkel 30, 31 erzeugt. Durch Variation der Geometrie der Federelemente 26, 27 kann die Federwirkung angepasst werden. Die Federelemente 26, 27 können auch jede andere beliebige Geometrie aufweisen, die dazu eingerichtet ist, die Abschlussblende 19 zwischen den Türprofilen 17, 18 zu zentrieren oder auszumitteln. Dies ist so lange möglich, solange die Federelemente 26, 27 eine Federkraft auf die Türprofile 17, 18 ausüben. Eine alternative Möglichkeit, die Federwirkung anzupassen, ist das Vorsehen von Schlitzen in den Federelementen 26, 27 oder durch eine Veränderung der Wandstärken der Schenkel 30, 31.

Vorteilhafterweise kann die Abschlussblende 19 mit den Federelementen 26, 27 einstückig, insbesondere materialeinstückig, hergestellt werden. Unter "einstückig" ist vorliegend zu verstehen, dass die Abschlussblende 19 und die Federelemente 26, 27 einteilig miteinander verbunden sind. Vorzugsweise sind die Abschlussblende 19 und die Federelemente 26, 27 materialeinstückig, das heißt, aus dem gleichen Werkstoff, ausgebildet. Durch diese materialeinstückige Lösung fallen keine zusätzlichen Teile- und Montagekosten an. Ein weiterer Vorteil der Abschlussblende 19 im Vergleich zu bekannten Abschlussblenden ist die leichtgängige Montage und Demontage sowohl in der Fertigung als auch beim Kunden. Der durch die Federelemente 26, 27 geschaffene Toleranzausgleich erlaubt größere Toleranzen in der Herstellung der Bauteile und führt gleichzeitig zu einer verbesserten Optik und Haptik der Tür 3 beim Kunden.

### Verwendete Bezugszeichen:

- 1: Haushaltsgargerät
- 2: Garraum
- 3: Tür
- 4: Oberkante
- 5: Griff
- 6: Boden
- 7: Decke
- 8: Rückwand
- 9: Seitenwand
- 10: Seitenwand
- 11: Bedienblende
- 12: Bedienknauf
- 13: Bedienknauf
- 14: Steuereinrichtung
- 15: Anzeigedisplay
- 16: Außenscheibe
- 17: Türprofil
- 18: Türprofil
- 19: Abschlussblende
- 20: Basisabschnitt
- 21: Einführhilfe
- 22: Einführhilfe
- 23: Schnapphaken
- 24: Schnapphaken
- 25: Eingriffsabschnitt
- 26: Federelement
- 27: Federelement
- 28: Einführhilfe
- 29: Einführhilfe
- 30: Schenkel
- 31: Schenkel
- 32: Kontaktabschnitt
- 33: Anschlagabschnitt
- 34: Oberkante
- 35: Kontaktfläche

- D: Demontagezustand
- M: Montagezustand
- x: x-Richtung
- y: y-Richtung
- z: z-Richtung
- Z1: Zustand
- Z2: Zustand

## Patentansprüche

1. Haushaltsgargerät (1) mit einem Garraum (2) und einer Tür (3) zum Verschließen des Garraums (2), wobei die Tür (3) zwei voneinander beabstandet angeordnete Türprofile (17, 18) und eine an einer Oberkante (4) der Tür (3) vorgesehene Abschlussblende (19) aufweist, die mit den Türprofilen (17, 18) formschlüssig verbunden ist, wobei die Abschlussblende (19) zwei Federelemente (26, 27) aufweist, wobei jedes Federelement (26, 27) einem der Türprofile (17, 18) zugeordnet ist und dieses kontaktiert, wobei die Federelemente (26, 27) federelastisch verformbar sind, um die Abschlussblende (19) zwischen den Türprofilen (17, 18) zu zentrieren, wobei die Abschlussblende (19) und die Federelemente (26, 27) einteilig ausgebildet sind, wobei die Abschlussblende (19) zwei federelastisch verformbare Schnapphaken (23, 24) aufweist, die dazu eingerichtet sind, formschlüssig in die Türprofile (17, 18) einzugreifen, wobei die Schnapphaken (23, 24) und die Federelemente (26, 27) voneinander getrennte Abschnitte der Abschlussblende (19) sind, wobei die Abschlussblende (19) mit Hilfe eines Aufsteckens derselben auf die Türprofile (17, 18) von einem Demontagezustand (D), in dem die Abschlussblende (19) außer formschlüssigem Eingriff mit den Türprofilen (17, 18) ist, in einen Montagezustand (M), in dem die Abschlussblende (19) in formschlüssigem Eingriff mit den Türprofilen (17, 18) ist, verbringbar ist, wobei die Federelemente (26, 27) jeweils einen Kontaktabschnitt (32) aufweisen, der dazu eingerichtet ist, bei einem Verbringen der Abschlussblende (19) von dem Demontagezustand (D) in den Montagezustand (M) oder umgekehrt auf einer korrespondierenden Kontaktfläche (35) des jeweiligen Türprofils (17, 18) abzugleiten, und wobei jedes Federelement (26, 27) einen ersten Schenkel (30) und einen mit Hilfe des Kontaktabschnitts (32) mit dem ersten Schenkel (30) verbundenen zweiten Schenkel (31) aufweist.

2. Haushaltsgargerät nach Anspruch 1, **dadurch gekennzeichnet, dass** die Abschlussblende (19) und die Schnapphaken (23, 24) einteilig ausgebildet sind.

3. Haushaltsgargerät nach Anspruch 1 oder 2, **dadurch gekennzeichnet, dass** jedes Türprofil (17, 18) einen Eingriffsabschnitt (25), insbesondere einen Hinterschnitt, aufweist, in den einer der Schnapphaken (23, 24) formschlüssig eingreift.

4. Haushaltsgargerät nach einem der Ansprüche 1 - 3, **dadurch gekennzeichnet, dass** die Kontaktflächen (35) so mit den Federelementen (26, 27) zusammenwirken, dass die Federelemente (26, 27) bei einem Verbringen der Abschlussblende (19) von dem Demontagezustand (D) in den Montagezustand (M) von einem unverformten Zustand (Z1) in einen verformten Zustand (Z2) verformbar sind.

5. Haushaltsgargerät nach einem der Ansprüche 1 - 4, **dadurch gekennzeichnet, dass** die Abschlussblende (19) zumindest eine Einführhilfe (21, 22) aufweist, mit deren Hilfe die Abschlussblende (19) bei einem Verbringen der Abschlussblende (19) von dem Demontagezustand (D) in den Montagezustand (M) linear an den Türprofilen (17, 18) geführt ist.

6. Haushaltsgargerät nach einem der Ansprüche 1 - 5, **dadurch gekennzeichnet, dass** die Abschlussblende (19) zumindest einen Anschlagabschnitt (33) aufweist, der in dem Montagezustand (M) eine korrespondierende Oberkante (34) des jeweiligen Türprofils (17, 18) kontaktiert.

## Claims

1. Household cooking appliance (1) with a cooking compartment (2) and a door (3) for closing the cooking compartment (2), wherein the door (3) has two door profiles (17, 18) arranged at a distance from one another and a fascia panel (19) provided on an upper edge (4) of the door (3), said fascia panel being connected with a positive fit to the door profiles (17, 18), wherein the fascia panel (19) has two spring elements (26, 27), wherein each spring element (26, 27) is assigned to and contacts one of the door profiles (17, 18), wherein the spring elements (26, 27) are resiliently deformable in order to centre the fascia panel (19) between the door profiles (17, 18), wherein the fascia panel (19) and the spring elements (26, 27) are embodied in one piece, wherein the fascia panel (19) has two resiliently deformable snap hooks (23, 24) configured to engage in a positive fit manner into the door profiles (17, 18), wherein the snap hooks (23, 24) and the spring elements (26, 27) are sections of the fascia panel (19) that are separate from one another, wherein the fascia panel (19), by being fitted onto the door profiles (17, 18), can be brought from a disassembled state (D), in which the fascia panel (19) is not engaged in a positive fit manner with the door profiles (17, 18), into an assembled state (M), in which the fascia panel (19) engages a positive fit manner with the door profiles (17, 18), wherein the spring elements (26, 27) each have a contact section (32) configured, when the fascia panel (19) is brought from the disassembled state (D) into the assembled state (M) or vice versa, to slide along a corresponding contact surface (35) of the respective door profile (17, 18), and wherein each spring element (26, 27) has a first limb (30) and a second limb (31) connected to the first limb (30) with the aid of the contact section (32).

2. Household cooking appliance according to claim 1, **characterised in that** the fascia panel (19) and the snap hooks (23, 24) are embodied in one piece.

3. Household cooking appliance according to claim 1 or 2, **characterised in that** each door profile (17, 18) has an engaging section (25), in particular an undercut, into which one of the snap hooks (23, 24) engages in a positive fit manner.

4. Household cooking appliance according to one of claims 1 - 3, **characterised in that** the contact surfaces (35) interact with the spring elements (26, 27) such that, when the fascia panel (19) is brought from the disassembled state (D) into the assembled state (M), the spring elements (26, 27) are deformable from a non-deformed state (Z 1) into a deformed state (Z2).

5. Household cooking appliance according to one of claims 1 - 4, **characterised in that** the fascia panel (19) has at least one insertion aid (21, 22), with the aid of which the fascia panel (19), when the fascia panel (19) is brought from the disassembled state (D) into the assembled state (M), is guided in a linear fashion on the door profiles (17, 18).

6. Household cooking appliance as claimed in one of claims 1 - 5, **characterised in that** the fascia panel (19) has at least one stop section (33) which, in the assembled state (M), contacts a corresponding upper edge (34) of the respective door profile (17, 18).

## Revendications

1. Appareil de cuisson domestique (1) comportant un espace de cuisson (2) et une porte (3) permettant de fermer l'espace de cuisson (2), dans lequel la porte (3) présente deux profilés de porte (17, 18) disposés à distance l'un de l'autre et un panneau de finition (19) prévu au niveau d'une arête supérieure (4) de la porte (3), lequel panneau est relié par complémentarité de formes aux profilés de porte (17, 18), dans lequel le panneau de finition (19) présente deux éléments à effet ressort (26, 27), dans lequel chaque élément à effet ressort (26, 27) est associé à l'un des profilés de porte (17, 18) et entre en contact avec celui-ci, dans lequel les éléments à effet ressort (26, 27) sont déformables élastiquement pour centrer le panneau de finition (19) entre les profilés de porte (17, 18), dans lequel le panneau de finition (19) et les éléments à effet ressort (26, 27) sont réalisés d'un seul tenant, dans lequel le panneau de finition (19) présente deux crochets d'encliquetage déformables élastiquement (23, 24) qui sont conçus pour se mettre en prise par complémentarité de formes dans les profilés de porte (17, 18), dans lequel les crochets d'encliquetage (23, 24) et les éléments à effet ressort (26, 27) sont des sections du panneau de finition (19) séparées l'une de l'autre, dans lequel le panneau de finition (19) est déplaçable à l'aide d'un accrochage de celui-ci sur les profils de porte (17, 18) d'un état de démontage (D), dans lequel le panneau de finition (19) est hors de prise par complémentarité de formes avec les profilés de porte (17, 18), à un état de montage (M), dans lequel le panneau de finition (19) est en prise par complémentarité de formes avec les profilés de portes (17, 18), dans lequel que les éléments à effet ressort (26, 27) présentent respectivement une section de contact (32) qui est conçue pour glisser lors d'un déplacement du panneau de finition (19) de l'état de démontage (D) à l'état de montage (M) ou inversement sur une surface de contact (35) correspondante du profilé de porte (17, 18) respectif, et dans lequel chaque élément à effet ressort (26, 27) présente une première branche (30) et une seconde branche (31) reliée à la première branche (30) à l'aide de la section de contact (32).

2. Appareil de cuisson domestique selon la revendication 1, **caractérisé en ce que** le panneau de finition (19) et les crochets d'encliquetage (23, 24) sont réalisés d'un seul tenant.

3. Appareil de cuisson domestique selon la revendication 1 ou 2, **caractérisé en ce que** chaque profilé de porte (17, 18) présente une section de mise en prise (25), en particulier une contre-dépouille dans laquelle l'un des crochets d'encliquetage (23, 24) se met en prise par complémentarité de formes.

4. Appareil de cuisson domestique selon l'une des revendications 1- 3, **caractérisé en ce que** les surfaces de contact (35) coopèrent avec les éléments à effet ressort (26, 27) de sorte que les éléments à effet ressort (26, 27) sont déformables d'un état non déformé (Z1) à un état déformé (Z2) lors d'un déplacement du panneau de finition (19) de l'état de démontage (D) à l'état de montage (M).

5. Appareil de cuisson domestique selon l'une des revendications 1 - 4, **caractérisé en ce que** le panneau de finition (19) présente au moins un moyen d'aide à l'introduction (21, 22) à l'aide duquel le panneau de finition (19) est guidé de manière linéaire au niveau des profilés de porte (17, 18)lors d'un déplacement du panneau de finition (19) de l'état de démontage (D) à l'état de montage (M).

6. Appareil de cuisson domestique selon l'une des revendications 1- 5, **caractérisé en ce que** le panneau de finition (19) présente au moins une section de butée (33) qui entre en contact avec une arête supérieure (34) correspondante du profilé de porte (17, 18) respectif dans l'état de montage (M).
